# EUROPEAN PATENT SPECIFICATION

(11) **EP 3 449 995 B1**
(45) Date of publication and mention of the grant of the patent: **23.09.2020**
(21) Application number: 18185300.3
(22) Date of filing: 24.07.2018
(51) Int. Cl.: B01D 35/06, B01D 35/153, B01D 35/16, B01D 35/30, B01D 29/11, B01D 29/66

(54) **A SLUDGE FILTER DEVICE**
SCHLAMMFILTERVORRICHTUNG
FILTRE DESEMBOUEUR

(30) Priority: 25.07.2017 IT 201700084635
(43) Date of publication of application: 06.03.2019
(73) Proprietor: Euroacque S.r.l., 40057 Granarolo dell'Emilia (BO) (IT)
(72) Inventor: BORDI, Paolo, 29122 Piacenza PC (IT)
(74) Representative: Barbaro, Gaetano

(56) References cited:
- WO-A1-00/27499
- WO-A1-96/04062
- GB-A- 970 826
- KR-A- 20130 129 509

## Description

### Technical field of the invention

The present invention generally relates to water filtration devices and in particular to a sludge filter device for heating and conditioning circuits.

### Background

Filtration and dirt separation devices are known in the field of water filtration devices. These devices are typically employed to remove impurities such as dirt and iron residues from water made to recirculate in heating and conditioning circuits, e.g. in house boilers having radiator assemblies, panel assemblies, fan coils and the like.

A sludge filter device generally comprises a main body, or head, made of a metallic or plastic material in which inlet and outlet ducts are obtained for connection to a line pipe, and a glass-shaped container in which a filter cartridge having, for example, a cylindrical shape, is housed. Coaxially with the filter cartridge, which is usually made of a plastic or metallic mesh, magnets can be housed to favor the retaining of ferrous impurities.

The cup-shaped container is removably fixed to the main body, for example by means of a threaded ring nut associated with a flange provided with a sealing element.

A flow of water entering the inlet duct obtained in the main body is diverted towards the cup-shaped container through which it crosses a filter cartridge which retains impurities with the aid of the magnets, if present. The filtered water coming out of the cup-shaped container goes back into the main body and comes out of the dirt separating filter device through the outlet duct.

Known sludge filter devices comprise three ducts arranged at 90° relative to one another formed in the main body, which allows for mounting either vertically or horizontally, i.e. with the axis of the cup-shaped container respectively perpendicular or parallel to the ground. A duct is used as an inlet, while the other two ducts can alternatively be used as an outlet by installing a plug that closes in a waterproof manner the unused one.

Sludge filter devices have recently been proposed in which the three pipes arranged at 90° with respect to each other are not made in the main body or head, but in the cup-shaped container and can be used interchangeably as an inlet or an outlet. A sludge filter device of this type is described in the Italian utility model application number 202015000064159.

As known, due to the deviation from the inlet duct to the filter cartridge and the subsequent deviation from the latter to the outlet duct, as well as from the reduced dimensions of at least some of the transverse passage sections, a flow of water that passes through a sludge filter device is subject to significant pressure drops. These pressure drops can penalize the functioning of a hydraulic device arranged downstream of the sludge filter device.

Moreover, in sludge filter devices such as the one described in the Italian application for utility model number 202015000064159, the path of the water flow through the filter cartridge strongly depends on the connection mode of the sludge filter device to the hydraulic inlet and outlet pipes, which determines a different effectiveness of the filtering action.

WO 96/04062 discloses a filtration device comprising a filtration unit which can be removed and cleaned, allowing to keep in function the plant in which the filtration device is inserted.

The document KR20130129509, on the basis of which the preamble of claim 1 is drafted, discloses a filtration device with three ducts arranged at 90° with respect to each other.

WO00/27499 discloses a filter for fluids comprising a hollow body which is closed by a head and contains at least one filtering medium.

GB970826 discloses a strainer of the type consisting of a cylindrical casing having an inlet and an outlet opposite one another and divided by a plate which is inclined upwards from below the inlet to above the outlet, the plate having an aperture the edges of which support a basket for collecting solids contained in liquids which pass therethrough.

### Summary of the invention

The technical problem addressed and solved by the present invention is thus that of providing a sludge filter device which allows to overcome the aforementioned drawbacks with reference to the prior art.

This problem is solved by a device according to claim 1.

Preferred features of the present invention are defined in the dependent claims.

An idea of solution underlying the invention is to provide a sludge filter device in the main body of which there are three ducts having the same cross section, arranged at 90° relative to each other and a passage in fluid communication with the cup-shaped container connected to the main body, wherein in the area where the axes of the ducts cross to each other there is a flow diverting member or septum that subdivides the internal volume so as to define two separate flow paths, a first flow path comprising two of the three perpendicular ducts and a second flow path comprising the third of the three ducts and the passage in fluid communication with the cup-shaped container. The two separate flow paths have substantially constant cross sections for the passage of water to and from the cup-shaped container, which minimizes the pressure losses caused by the sludge filter device.

Inside the filter cartridge, consisting of a net of plastic or metallic material, magnets can be advantageously housed to facilitate retention of ferrous impurities. The flow of water is first subjected to the action of the magnets and then to that of the mesh, maximizing the retaining of impurities and further contributing to reduction of pressure losses.

According to a further aspect of the invention, the sludge filter device may comprise a vent cap comprising a slotted cup body configured to be inserted in a waterproof manner around the hollow cylindrical portion of which the cup-shaped container is provided. The cap further comprises a pin which extends axially from the cup body and is configured to be sealed in the hollow cylindrical portion of the cup-shaped container. The pin has a portion having a smaller cross-section than that of the hollow cylindrical portion, whereby, by extracting the cap from the latter, the pressurized water present in the cup-shaped container passes through the pin, filling the volume which is created because of the removal of the cup-shaped body from the cylindrical hollow portion and protrudes through the slits of the same cup-shaped body.

Thanks to these characteristics, the venting operation of the sludge filter device can be carried out while minimizing the risks of spraying and polluting adjacent surfaces to it.

Other advantages, features and methods of use of the present invention will be apparent from the following detailed description of some embodiments, presented by way of a non-limiting example.

### Brief description of the figures

Reference will be made to the figures of the attached drawings, in which:

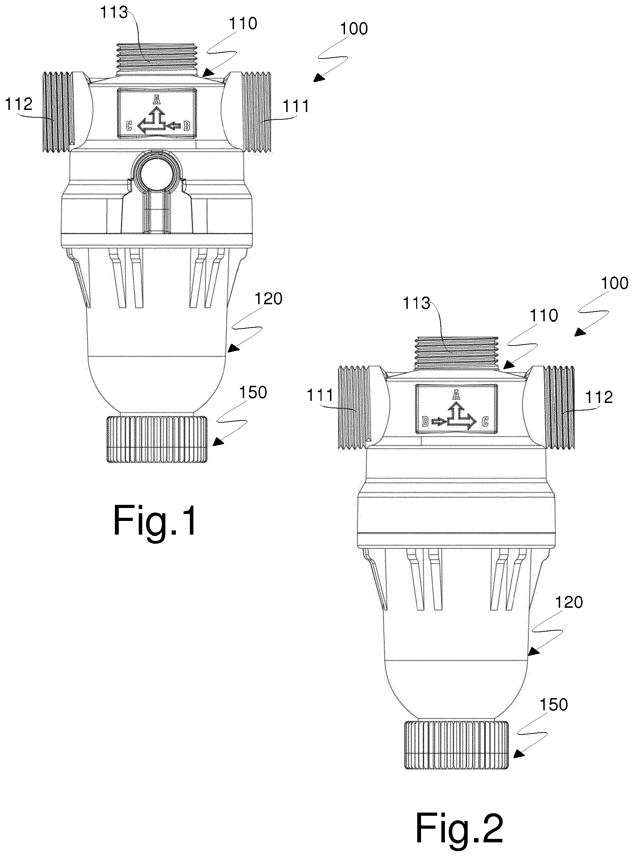

- Figure 1 is a front view showing a sludge filter device according to the invention;
- Figure 2 is a rear view of the sludge filter device of Figure 1;
- Figure 3 is a longitudinal sectional view of the sludge filter device of Fig. 1 configured for a mounting in which the cup-shaped container is arranged perpendicular to a line pipe and a water flow exits from one or more of the ducts formed in the main body that is oriented coaxially thereto;
- Figure 4 is a longitudinal sectional view of the sludge filter device of Figure 1 configured for a mounting in which the cup-shaped container is arranged perpendicularly to a pipe and a stream of water comes out of one of the ducts formed in the main body which is disposed perpendicularly thereto;
- Figure 5 is a longitudinal sectional view of the sludge filter device of Figure 1 configured for a mounting in which the cup-shaped container is arranged coaxially with a line pipe and a stream of water exits from one of the ducts formed in the main body which is arranged perpendicular thereto;
- Figure. 6 is a longitudinal sectional view showing the sludge filter device of Figure. 1 in a discharge configuration;
- Figure 7 shows a detail of Figure 6.

### Detailed description of preferred embodiments

Referring initially to Figures from 1 to 4, a sludge filter device according to the invention is generally indicated with the reference number 100.

The sludge filter device 100 comprises a main body 110, made for example of a metallic or plastic material, and a cup-shaped container 120 having a generally cylindrical shape removably fixed to the main body 110, for example by means of a threaded coupling provided with a sealing element.

Inside the cup-shaped container 120 there is housed a filter cartridge 130 which is also generally cylindrical in shape.

The main body 110 comprises a first duct 111 and a second duct 112 arranged on its opposite sides and whose longitudinal axes A, B are, for example, arranged coaxially.

The main body 110 further comprises a third duct 113 having a C axis perpendicular to the axes A and B respectively of the first duct 111 and of the second duct 112.

The first duct 111, the second duct 112 and the third duct 113 have connections, for example threaded, for connecting to line pipes and/or hydraulic appliances.

The main body 110 also comprises a passage 114 which allows fluid communication with the cup-shaped container 120. The passage 114 has an axis D perpendicular to the axes A and B respectively of the first duct 111 and of the second duct 112 and for example coinciding with the C axis of the third duct 113. Overall, the three ducts 111, 112, 113 and the passage 114 are arranged at 90° with respect to each other and they have substantially the same cross-section

According to the invention, in an area where the axes A, B, C, D, respectively, of the first duct 111, of the second duct 112, of the third duct 113 and of the passage 114 cross each other, a flow diverting member 115, or septum, is arranged which divides the internal volume of the main body 110 so as to define in it two separate flow paths, a first flow path comprising two of the three perpendicular ducts and a second flow path comprising the third of the three ducts and the passage in fluid communication with the cup-shaped container.

The two separate flow paths have substantially constant cross sections for the passage of water respectively from an input of the main body 110 towards the cup-shaped container 120 and the filter cartridge 130 housed therein and from the latter to an outlet of the body 110, the inlet and the outlet being respectively constituted by two ducts among the first duct 111, the second duct 112 and the third duct 113.

Thanks to this combination of characteristics, it is possible to minimize the overall pressure losses caused in a water flow by the presence of the sludge filter device 100 mounted on a line pipe.

In the illustrated embodiment, the flow diverting member 115 is for example constituted by a flat surface inclined by 45° with respect to the axes of the three ducts 111, 112, 113 and of the passage 114 and is arranged so as to put in fluid communication the first duct 111 with the passage 114 and the second duct 112 with the third duct 113.

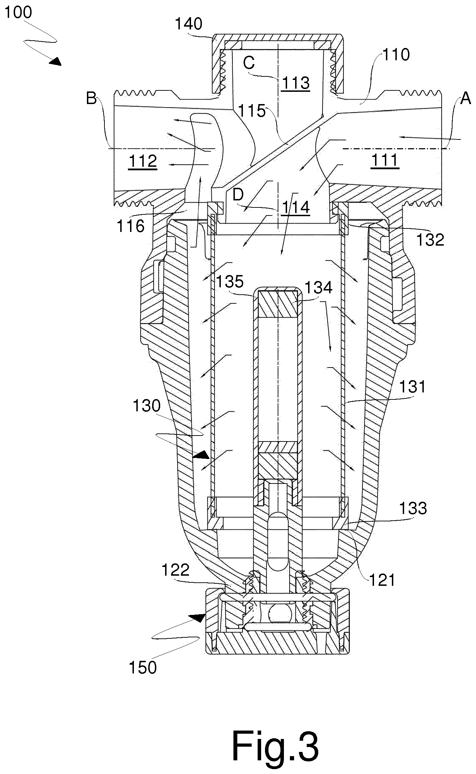

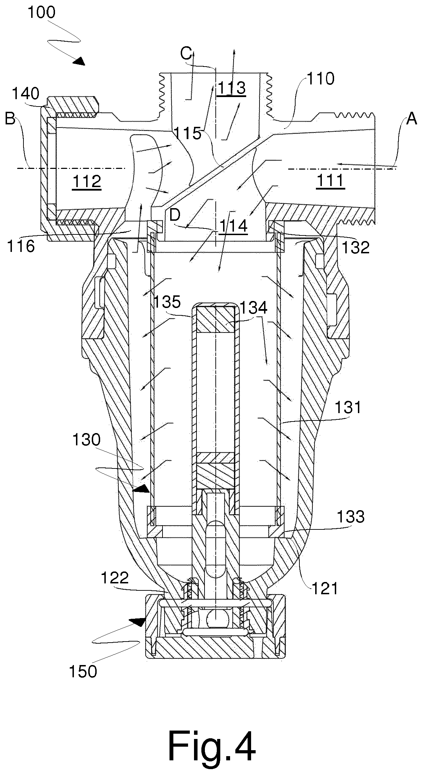

In light of the foregoing and with reference to the embodiments shown in Figures 3 and 4, a flow of water entering from the first duct 111 is deflected by the flow diverting member 115 axially in the filter cartridge 130 housed in the cup-shaped container 120, protrudes from the filter cartridge 130 radially purified from the impurities contained therein, and exits through the second duct 112 (Figure 3), or through the third duct 113 (Figure 4), which communicate with the cup-shaped container 120 through a passage 116.

In the embodiment shown in Figure 3, the third duct 113 is sealed by a plug 140, whereas in the embodiment shown in Figure 4 the plug 140 is sealedly applied to the second duct 112.

The flow diverting member 115 constitutes in essence the fulcrum or the core of the sludge filter device 100, that is the element of the main body 110 which allows to separate the input and output flows of water minimizing pressure drops thanks to the fact that respective flow paths having substantially constant cross sections are defined.

It will be understood that the arrangement of the flow diverting member 115 described above is not binding for the invention and that it could be arranged in a completely equivalent manner to receive a flow of water from the second duct 112 and deviate it axially through the passage 114 in the filter cartridge 130 housed in the cup-shaped container 120.

Moreover, the flow diverting member 115 could also have a different shape from the flat one shown in the figures, for example, it was biconcave with the concavities facing the inlets of the ducts 111, 112, 113.

The filter cartridge 130 is constituted by a cylindrical mesh 131 made of a plastic or metal material extending coaxially to the cup-shaped container 120. It ideally splits the containment volume of the cup-shaped container 120 into a volume inside the filter cartridge 130, in fluid communication with the passage 114, and in a volume outside the filter cartridge 130, in fluid communication with the second duct 112.

As shown in the longitudinal section of figures 3 and 4, respective annular seals are mounted at the ends of the mesh 131. A first annular seal 132 seals the passage 114, while a second annular seal 133 rests on a shoulder 121 formed near the bottom of the cup-shaped container 120.

In the illustrated embodiment, the filter cartridge 130 further advantageously comprises magnets 134 to facilitate the retention of ferrous impurities. The magnets 134 are housed in a container 135 which extends axially from the bottom of the cup-shaped container 120.

Still with reference to Figures 3 and 4, as explained above, the flow of water is received axially in the cup-shaped container 120 inside the filter cartridge 130, it is immediately subjected to the cleaning action carried out by the magnets 134 and subsequently to that of the 131 mesh, maximizing the effectiveness of the filtering action of the cartridge 130. This configuration further contributes to the reduction of pressure losses, since most of the impurities contained in the incoming water flow are retained by the magnets, facilitating the subsequent passage through the mesh 131.

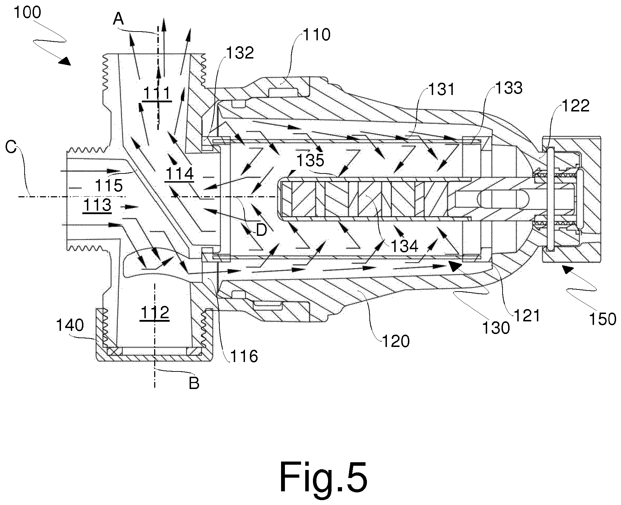

Referring now to Fig. 5, a mounting arrangement is shown according to which the third duct 113 serves as a water inlet, whereby the cup-shaped container 120 is coaxially arranged to a line pipe. The second duct 112 is sealed by the plug 140, whereby the flow of water reaches the cup-shaped container 120, passes radially throughout the mesh 131 and exits axially from the body 110 passing through the passage 114 and the first duct 111. The arrows in figure 5 schematically show the direction of the water flow. This mounting configuration is extremely advantageous when the sludge filter device 100 is mounted under heating apparatus for domestic use, because the cup-shaped container 120 does not protrude vertically, leaving free the space below.

To carry out the cleaning and maintenance operations of a dirt separating device such as the device 100 described above, it is necessary to remove the cup-shaped container 120 from the main body 110 and remove the impurities accumulated therein from the filter cartridge 130 housed therein. To carry out these operations, the sludge filter device 100 must be temporarily isolated from the hydraulic line, by acting on appropriate valves arranged near the inlet duct and the outlet duct, and emptied from the residual water remaining in the cup-shaped container 120.

The cup-shaped container 120 can be emptied by means of a tap, for example provided with a ball valve, mounted on a hollow portion 122 formed in the cup-shaped container 120 itself, typically on the bottom, or through a simple hood applied tightly thereto.

Since the water that remains inside the cup-shaped container is dirty and under pressure, the emptying operation must be carried out with care to minimize the splashes and thus the soiling of the surfaces adjacent to the dirt separating device.

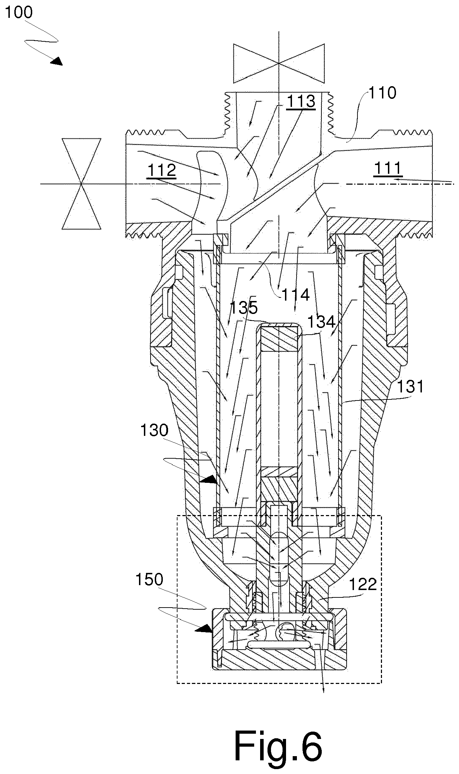

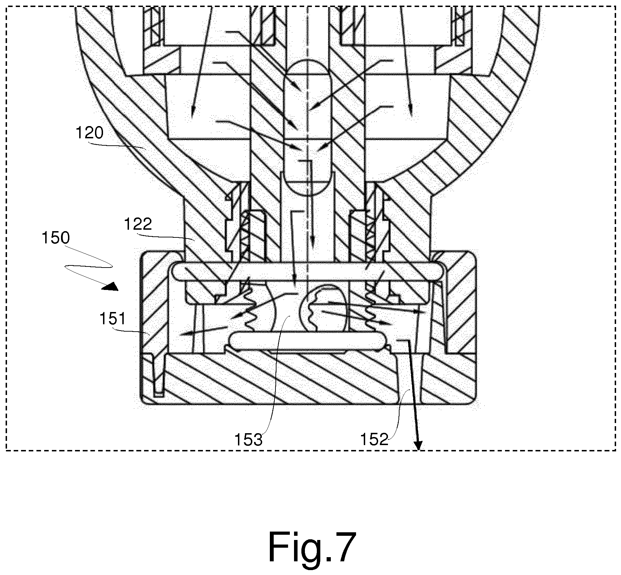

Referring now to Figs. 6 and 7, according to a further aspect of the invention, the sludge filter device 100 is advantageously provided with a special cap 150 sealingly mounted on the bottom of the cup-shaped container 120.

The cap 150 comprises a cup-shaped body 151 configured to be inserted tightly around the cylindrical hollow portion 122 of the cup-shaped container 120. In the illustrated embodiment, the seal is for example made of an O-ring disposed in a circumferential seat formed in the perimeter wall of the cup-shaped body 151 near its edge.

On the bottom of the cup-shaped body 151 one or more vent slits 152 are formed.

The cap 150 further comprises a pin 153 extending axially from the cup-shaped body 151 and configured to be sealed in the cylindrical hollow portion 122. In the illustrated embodiment, the seal is, for example, made with an O-ring disposed coaxially with the pin 153 at its base, i.e. where it is connected to the cup-shaped body 151.

The pin 153 has a portion having a smaller cross-section than that of the cylindrical cavity 122, thus, by spinning the cap 150 from the latter, the pressurized water present into the cup-shaped container 120, and also into the ducts 111, 112, 113 once the taps arranged on the line pipes are closed, passes through the pin 153, fills the volume that is created by effect of removal of the cup-shaped body 151 by the hollow cylindrical portion 122 and exits through the vent slits 152, as shown schematically by the arrows in figures 6 and 7.

In the illustrated embodiment the pin 153 is, for example, axially and radially drilled, so that the water exiting from the cup-shaped container 120 passes through it.

The various passages through which water is forced to pass cause relevant pressure losses that reduce water pressure, minimizing splashes and the risk of dirtying the surfaces surrounding the sludge filter device 100.

The cap 150 can be advantageously secured to the cylindrical hollow portion 122 by means of a threaded coupling, for example made on the pin 153. This allows progressively to slide out the cap 150 helping to minimize sputtering and the risk of dirtying the surrounding surfaces of the sludge filter device 100.

For the cap 150 of the sludge filter device 100, separate protection may be requested, regardless of the characteristics of the independent claim 1.

The present invention has been described with reference to its preferred embodiments. It will be understood that there may be further embodiments relating to the same inventive core, as defined by the scope of protection of the claims set forth below.

## Claims

1. A sludge filter device (100) comprising:
i) a main body (110) wherein three ducts (111, 112, 113) are formed, respectively a first duct (111) having a first longitudinal axis (A), a second duct (112) having a second longitudinal axis (B) arranged at 180° relative to said first longitudinal axis (A) of the first duct (111), a third duct (113) having a third longitudinal axis (C) arranged at 90° relative to said first longitudinal axis (A) of the first duct (111) and relative to said second longitudinal axis (B) of the second duct (112), said ducts (111, 112, 113) having a same cross section and comprising attachment members configured to be assembled to hydraulic pipes and/or hydraulic appliances;
ii) a cup-shaped container (120) removably restrained to said main body (110);
iii) a filter cartridge (130) housed in said cup-shaped container (120), that divides a containment volume of the cup-shaped container (120) in a first volume and in a second volume separated by said filter cartridge (130), wherein said first volume is inside the filter cartridge (130) and said second volume is outside the filter cartridge (130);
wherein said second duct (112) is in fluid communication with said third duct (113) and with said second volume;
wherein a passage (114), having a fourth longitudinal axis (D) arranged at 90° relative to said first axis (A) of the first duct (111) and relative to said second axis (B) of the second duct (112), adapted to allow fluid communication between said first duct (111) and said first volume
**characterized in that**
said passage (114) has a cross section substantially equal to said cross section of each of the ducts (111, 112, 113),
a flow diverting member (115) is formed in the main body (110) passing where the longitudinal axes (A, B, C) of the three ducts (111, 112, 113) and the longitudinal axis (D) of the passage (114) meet each other, said flow diverting member (115) dividing the inner volume of the main body (110) so as to define inside it two separate flow paths, a first flow path comprising said second duct (112) and said third duct (113) mutually perpendicular to each other, and a second flow path comprising said first duct (111) and the passage (114) in fluid communication with the cup-shaped container (120).

2. A sludge filter device (100) according to claim 1, wherein said flow diverting member (115) is a flat member inclined by 45° relative to the axes (A, B, C) of the three ducts (111, 112, 113).

3. A sludge filter device (100) according to claim 1 or 2, wherein the filter cartridge (130) comprises a mesh (131) arranged along a cylindrical surface coaxially with the cup-shaped container (120) between a shoulder (121) thereof located close to its bottom and the passage (114) allowing fluid communication between the ducts (111, 112, 113) and the cup-shaped container (120).

4. A sludge filter device (100) according to claim 3, wherein the filter cartridge (130) further comprises magnets (134) housed in a container (135), which is housed in the first volume and extends from the bottom of the cup-shaped container (120) coaxially thereto.

5. A sludge filter device (100) according to claim 1, further comprising a plug (140) configured to tightly seal one of the three ducts (111, 112, 113) formed in the main body (110).

6. A sludge filter device (100) according to any one of claims 1 to 5, further comprising a cap (150) tightly assembled on a hollow cylindrical portion (122) of the cup-shaped container (120) protruding from its bottom, said cap (150) comprising a cup-shaped body (151) configured to be tightly fitted to said hollow cylindrical portion (122), the cap (150) further comprising one or more vent slits (152) formed on a bottom wall of said cup-shaped body (151) and a pin (153) extending axially from the cup-shaped body (151), said pin (153) being configured to be tightly fitted in the hollow cylindrical portion (122) and comprising a portion having a cross section smaller than the cross section of a cavity of the hollow cylindrical portion (122) inside which the pin (153) can be fitted.

7. A sludge filter device (100) according to claim 6, wherein the pin (153) is axially hollow and comprises radial through holes.

8. A sludge filter device (100) according to claim 6 or 7, wherein the cap (150) is restrained to the hollow cylindrical portion (122) by way of a threaded coupling.

## Patentansprüche

1. Eine Schlammfiltervorrichtung (100), umfassend:
i) einen Hauptleitungskörper (110), worin drei Rohrleitungen (111, 112, 113) ausgebildet sind, nämlich in dieser Reihenfolge eine erste Rohrleitung (111) mit einer ersten Längsachse (A), eine zweite Rohrleitung (112) mit einer zweiten Längsachse (B), die unter 180° gegenüber der besagten ersten Längsachse (A) der ersten Rohrleitung (111) angeordnet ist, und eine dritte Rohrleitung (113) mit einer dritten Längsachse (C), die unter 90° gegenüber der besagten ersten Längsachse (A) der ersten Rohrleitung (111) und gegenüber der besagten zweiten Längsachse (B) der zweiten Rohrleitung (112) angeordnet ist, wobei die besagten Rohrleitungen (111, 112, 113) den selben Querschnitt haben und Befestigungselemente aufweisen, welche dazu ausgebildet sind, mit Hydraulikrohren und/oder mit Hydraulikgeräten zusammengefügt zu werden;
ii) ein becherförmiger Behälter (120), der an dem besagten Hauptleitungskörper (110) lösbar festgehalten ist;
iii) eine in dem becherförmigen Behälter (120) aufgenommene Filterpatrone (130), die ein von dem becherförmigen Behälter (120) eingeschlossenes Volumen in ein erstes Volumen und in ein zweites Volumen unterteilt, welche durch die besagte Filterpatrone (130) voneinander getrennt sind, wobei sich das besagte erste Volumen innerhalb der Filterpatrone (130) befindet und das besagte zweite Volumen außerhalb der Filterpatrone (130);
- wobei die besagte zweite Rohrleitung (112) in Strömungsverbindung mit der besagten dritten Rohrleitung (113) und mit dem besagten zweiten Volumen steht;
- wobei ein Durchlass (114) mit einer vierten Längsachse (D), die unter 90° gegenüber der besagten ersten Längsachse (A) der ersten Rohrleitung (111) und gegenüber der besagten zweiten Längsachse (B) der zweiten Rohrleitung (112) angeordnet ist, dazu geeignet ist, eine Strömungsverbindung zwischen der besagten ersten Rohrleitung (111) und dem besagten ersten Volumen zu ermöglichen,
**dadurch gekennzeichnet, dass**
- der besagte Durchlass (114) einen Querschnitt aufweist, welcher substantiell gleich dem besagten Querschnitt von jeder der Rohrleitungen (111, 112, 113) ist,
- wobei in dem Hauptleitungskörper (110) ein flussumlenkendes Element (115) ausgebildet ist, welches dort verläuft, wo sich die Längsachsen (A, B, C) der ersten drei Rohrleitungen (111, 112, 113) und die Längsachse (D) des Durchlasses (114) treffen, wobei das flussumlenkende Element (115) das innere Volumen des Hauptleitungskörpers (110) unterteilt, um darin zwei getrennte Flusspfade abzugrenzen, einen ersten Flusspfad, der die besagte zweite Rohrleitung (112) und die besagte dritte Rohrleitung (113) umfasst, welche lotrecht zueinander sind, und einen zweiten Flusspfad, der die besagte erste Rohrleitung (111) umfasst sowie den Durchlass (114) in Strömungsverbindung mit dem becherförmigen Behälter (120).

2. Eine Schlammfiltervorrichtung (100) nach Anspruch 1, wobei das besagte, flussumlenkende Element (115) ein flaches Teil ist, das um 45° gegenüber den Achsen (A, B, C) der drei Rohrleitungen (111, 112, 113) geneigt ist.

3. Eine Schlammfiltervorrichtung (100) nach Anspruch 1 oder 2, wobei die Filterpatrone (130) ein Netz (131) umfasst, das entlang einer zylindrischen Fläche koaxial zu dem becherförmigen Behälter (120) angeordnet ist zwischen einer Schulter (121) desselben, welche sich in der Nähe von dessen Boden befindet, und dem Durchfluss (114), der die Strömungsverbindung zwischen den Rohrleitungen (111, 112, 113) und dem becherförmigen Behälter (120) ermöglicht.

4. Eine Schlammfiltervorrichtung (100) nach Anspruch 3, wobei die Filterpatrone (130) ferner Magnete (134) umfasst, welche in einem Behälter (135) aufgenommen sind, der sich in dem ersten Volumen befindet und sich von dem Boden des becherförmigen Behälters (120) koaxial dazu erstreckt.

5. Eine Schlammfiltervorrichtung (100) nach Anspruch 1, ferner umfassend einen Verschluss (140), welcher derart gestaltet ist, um eine der drei in dem Hauptleitungskörper (110) ausgebildeten Rohrleitungen (111, 112, 113) dicht zu verschließen.

6. Eine Schlammfiltervorrichtung (100) nach einem der Ansprüche 1 bis 5, ferner umfassend eine Kappe (150), welche dichtend an einem hohlzylindrischen Bereich (122) des becherförmigen Behälters (120), der dichtend von dessen Boden herausragt, angebaut ist, wobei die besagte Kappe (150) einen becherförmigen Körper (151) umfasst, welcher derart gestaltet ist, um an den besagten hohlzylindrischen Körper eng angepasst zu sein, wobei die Kappe (150) ferner einen oder mehrere in einer Bodenwand des besagten becherförmigen Körpers (151) ausgebildete Entlüftungsschlitze (152) umfasst sowie einen Stift (153), der sich von dem becherförmigen Körper (151) aus in axialer Richtung erstreckt, wobei der besagte Stift (153) derart gestaltet ist, um in den hohlzylindrischen Bereich (122) eng eingepasst zu werden, und einen Bereich mit einem Querschnitt aufweist, der kleiner ist als der Querschnitt eines Hohlraums des hohlzylindrischen Bereichs (122), in welchen der Stift (153) eingepasst werden kann.

7. Eine Schlammfiltervorrichtung (100) nach Anspruch 6, wobei der Stift (153) in axialer Richtung hohl ist und radiale Durchgangslöcher aufweist.

8. Eine Schlammfiltervorrichtung (100) nach Anspruch 6 oder 7, wobei die Kappe (150) mittels einer Schraubverbindung an dem hohlzylindrischen Bereich (122) gehalten wird.

## Revendications

1. Filtre désemboueur (100) comprenant :
i) un corps principal (110), dans lequel trois conduits (111, 112, 113) sont formés, respectivement un premier conduit (111) ayant un premier axe longitudinal (A), un deuxième conduit (112) ayant un deuxième axe longitudinal (B) agencé à 180° par rapport audit premier axe longitudinal (A) du premier conduit (111), un troisième conduit (113) ayant un troisième axe longitudinal (C) agencé à 90° par rapport audit premier axe longitudinal (A) du premier conduit (111) et par rapport audit deuxième axe longitudinal (B) du deuxième conduit (112), lesdits conduits (111, 112, 113) ayant une même section transversale et comprenant des éléments de fixation configurés pour être assemblés aux tuyaux hydrauliques et/ou aux appareils hydrauliques ;
ii) un récipient en forme de coupelle (120) retenu de manière amovible sur ledit corps principal (110) ;
iii) une cartouche de filtre (130) logée dans ledit récipient en forme de coupelle (120), qui divise un volume de confinement du récipient en forme de coupelle (120) en un premier volume et en un second volume, séparés par ladite cartouche de filtre (130), dans lequel ledit premier volume est à l'intérieur de la cartouche de filtre (130) et ledit second volume est à l'extérieur de la cartouche de filtre (130) ;
dans lequel ledit deuxième conduit (112) est en communication de fluide avec ledit troisième conduit (113) et avec ledit second volume ;
dans lequel un passage (114) ayant un quatrième axe longitudinal (D) agencé à 90° par rapport audit premier axe (A) du premier conduit (111) et par rapport audit deuxième axe (B) du deuxième conduit (112), adapté pour permettre la communication de fluide entre ledit premier conduit (111) et ledit premier volume,
**caractérisé en ce que** :
ledit passage (114) a une section transversale sensiblement égale à ladite section transversale de chacun des conduits (111, 112, 113),
un élément de déviation d'écoulement (115) est formé dans le corps principal (110) passant à l'endroit où les axes longitudinaux (A, B, C) des trois conduits (111, 112, 113) et l'axe longitudinal (D) du passage (114) se rencontrent, ledit élément de déviation d'écoulement (115) divisant le volume interne du corps principal (110) afin de définir à l'intérieur de ce dernier deux trajectoires d'écoulement séparées, une première trajectoire d'écoulement comprenant ledit deuxième conduit (112) et ledit troisième conduit (113) mutuellement perpendiculaires entre eux, et une seconde trajectoire d'écoulement comprenant ledit premier conduit (111) et le passage (114) en communication de fluide avec le récipient en forme de coupelle (120).

2. Filtre désemboueur (100) selon la revendication 1, dans lequel ledit élément de déviation d'écoulement (115) est un élément plat incliné à 45° par rapport aux axes (A, B, C) des trois conduits (111, 112, 113).

3. Filtre désemboueur (100) selon la revendication 1 ou 2, dans lequel la cartouche de filtre (130) comprend une maille (131) agencée le long d'une surface cylindrique de manière coaxiale avec le récipient en forme de coupelle (120) entre son épaulement (121) positionné à proximité de son fond et le passage (114) permettant la communication de fluide entre les conduits (111, 112, 133) et le récipient en forme de coupelle (120).

4. Filtre désemboueur (100) selon la revendication 3, dans lequel la cartouche de filtre (130) comprend en outre des aimants (134) logés dans un récipient (135), qui est logé dans le premier volume et s'étend à partir du fond du récipient en forme de coupelle (120) de manière coaxiale par rapport à ce dernier.

5. Filtre désemboueur (100) selon la revendication 1, comprenant en outre un bouchon (140) configuré pour sceller hermétiquement l'un des trois conduits (111, 112, 113) formés dans le corps principal (110).

6. Filtre désemboueur (100) selon l'une quelconque des revendications 1 à 5, comprenant en outre un capuchon (150) assemblé de manière étanche sur une partie cylindrique creuse (122) du récipient en forme de coupelle (120) faisant saillie de son fond, ledit capuchon (150) comprenant un corps en forme de coupelle (151) configuré pour être monté de manière étanche à ladite partie cylindrique creuse (122), le capuchon (150) comprenant en outre une ou plusieurs fentes d'évent (152) formées sur une paroi inférieure dudit corps en forme de coupelle (151) et une broche (153) s'étendant axialement à partir du corps en forme de coupelle (151), ladite broche (153) étant configurée pour être montée de manière étanche dans la partie cylindrique creuse (122) et comprenant une partie ayant une section transversale inférieure à la section transversale d'une cavité de la partie cylindrique creuse (122) à l'intérieur de laquelle la broche (153) peut être montée.

7. Filtre désemboueur (100) selon la revendication 6, dans lequel la broche (153) est axialement creuse et comprend des trous débouchants radiaux.

8. Filtre désemboueur (100) selon la revendication 6 ou 7, dans lequel le capuchon (150) est retenu sur la partie cylindrique creuse (122) au moyen d'un couplage fileté.
